# EUROPEAN PATENT APPLICATION

(11) **EP 2 107 543 A1**
(43) Date of publication of application: **07.10.2009**
(21) Application number: 08153928.0
(22) Date of filing: 01.04.2008
(51) Int. Cl.: G09B 29/10

(54) **Run-time label cache for efficient map labeling by an electronic map display**

(71) Applicant: Research In Motion Limited, Waterloo, Ontario N2L 3W8 (CA)
(72) Inventor: Bowman, Gordon Gregory, Kemptville Ontario K0G 1J0 (CA); Zhao, Lin, Kanata Ontario K2K 3M2 (CA)
(74) Representative: Patel, Binesh

(57) **Abstract**

A wireless communications device has a processor coupled to a memory for reconstructing a map feature from discrete sets of map data that provide redundant labels for the map feature to thereby generate a reconstructed map feature having only a single instance of the label, wherein the memory stores a run-time label cache for caching the reconstructed map feature and the label associated with the reconstructed map feature for reuse in rendering a subsequent map that also includes the reconstructed map feature. As new map data is received for each subsequent map, for example when the map is panned, the reconstructed map feature is modified by trimming off portions of the map feature that have moved outside the area of interest and by stitching to the reconstructed map feature portions of the map feature that have moved into the area of interest.

## Description

The present disclosure relates generally to wireless communications devices and, in particular, to techniques for generating labelled map content on wireless communications devices.

Wireless communications devices such as the BlackBerry® by Research in Motion Limited enable users to download map content from Web-based data sources such as BlackBerry Maps^{™}, Google Maps^{™} or Mapquest^{™}. Downloaded map content is displayed on a small liquid-crystal display (LCD) screen of the wireless communications device for viewing by the user. The user can pan up and down and side to side as well as zoom in or out. Due to the small display on the device and due to the limited over-the-air (OTA) bandwidth, there is generally a need to optimize the delivery and handling of the map data.

Vector map data, including label data for labelling map features, is communicated from map servers to wireless communications devices in discrete sets of map data which are assembled or reconstructed client-side to provide the map content requested by the user. However, when reconstructing a map from discrete sets of data, redundant labelling can occur if labels associated with each set of data are rendered for the same feature. In co-pending U.S. Patent Application Serial No. 11/691,257 entitled "STITCHING OF PATHS FOR IMPROVED TEXT-ON-PATH RENDERING OF MAP LABELS" filed March 26, 2007, Applicant discloses a novel technique for stitching together map features such as, for example, path segments by comparing end-points and then positioning a single instance of the label in association with the map feature. While this labelling technique is very useful for rendering maps with aesthetically placed labels, running the stitching algorithm is processor-intensive. Thus, when a user, for example, pans the map, even slightly, the stitching algorithm is invoked for reconstructing the map features in the area of interest. Having to reconstruct the map features and re-compute each reconstructed feature's map label placement every time the map is panned can be very burdensome on the processor, particularly in dense urban environments where the path and label density is high. Accordingly, an improved stitching technique for more efficiently labelling maps is highly desirable.

### GENERAL

The present technology may provide, in general, a method, computer program product, and wireless communications device that efficiently renders labelled maps by caching in a run-time label cache one or more map features that have been reconstructed from discrete sets of downloaded map data as well as their associated labels. The reconstructed map features and associated labels in the run-time label cache can be reused to render the map when the map is panned, zoomed or otherwise shifted such that the new area of interest of the map includes at least one of the cached map features. This caching technique preferably obviates the need to entirely reconstruct the map features every time the map is panned or zoomed, thus economizing the processing resources of the device.

Thus, an aspect of the present technology may be a method of displaying a labelled map on a wireless communications device. The method comprises steps of creating a run-time label cache in a memory of the wireless communications device and reconstructing a map feature from discrete sets of map data that provide redundant labels for the map feature to thereby generate a reconstructed map feature having only a single instance of the label. The method further comprises steps of storing in the run-time label cache the reconstructed map feature and the single instance of the label associated with the reconstructed map feature, and upon receipt of new map data, rendering the labelled map based only partially on the new map data by reusing the reconstructed map feature and the single instance of the label associated with the reconstructed map feature stored in the run-time label cache.

Another aspect of the present technology may be a computer program product that includes code adapted to perform the steps of the foregoing method when the computer program product is loaded into memory and executed on a processor of a wireless communications device.

Yet another aspect of the present technology comprises a wireless communications device for displaying a labelled map on the device. The wireless communications device may comprise a radiofrequency transceiver for receiving map data to be rendered on a display of the device, and a processor coupled to a memory for reconstructing a map feature from discrete sets of map data that provide redundant labels for the map feature to thereby generate a reconstructed map feature having only a single instance of the label. The memory stores a run-time label cache for caching the reconstructed map feature and the label associated with the reconstructed map feature for reuse in rendering a subsequent map that also includes the reconstructed map feature.

### BRIEF DESCRIPTION OF THE DRAWINGS

Further features and advantages of the present technology will become apparent from the following detailed description, taken in combination with the appended drawings, in which:

FIG. 1 is a block diagram schematically illustrating some of the main components of a wireless communications device and of a wireless communications network;

FIG. 2 is a more detailed block diagram of a wireless communications device;

FIG. 3A is a system diagram of network components which provide mapping functionality in the wireless communications devices of FIG. 1 and FIG. 2;

FIG. 3B illustrates a message exchange between a wireless communications device and a map server for downloading map content to the wireless communications device based on the system of FIG. 3A;

FIG. 3C is a diagram showing a preferred Maplet data structure as one example of a map data structure;

FIG. 4 is a schematic depiction of another example of a wireless network, this network having an applications gateway for optimizing the downloading of map data from map servers to wireless communications devices;

FIG. 5 is a flowchart presenting steps of a method of displaying a labelled map on a wireless device that involves caching and reusing at least one reconstructed map feature and its associated label to more efficiently regenerate a subsequent maps that includes the same map feature;

FIG. 6 schematically depicts the potential problem of redundant labelling that may be encountered when map features are rendered from discrete sets of map data;

FIG. 7 schematically depicts the potential problems of having both poorly placed labels and highly constrained labels that may be encountered when map features are rendered from discrete sets of map data by blindly squelching duplicated labels;

FIG. 8 schematically depicts a process of stitching together path segments (and constituent elements of other map features) to create reconstructed paths (and map features);

FIG. 9A schematically depicts constructing a label list with link, vector, and flag information for efficiently stitching together the map features of FIG. 6;

FIG. 9B schematically depicts a process of determining whether an endpoint of one path associated with a duplicated label matches an endpoint of another path having the same duplicated label;

FIG. 9C schematically depicts a process of determining vector directionality for vector map data;

FIG. 10 is a depiction of a street map having five reconstructed paths (Main Street, First Avenue, Second Avenue, Third Avenue and Fourth Avenue) that have been reconstructed by stitching together associated path segments taken from discrete sets of map data for four neighbouring areas (e.g. four neighbouring Maplets);

FIG. 11 is a depiction of the street map of FIG. 10 after having panned the map to the right, in which case additional path segments are stitched (or spliced) to two of the reconstructed paths (namely First Avenue and Second Avenue) to thus create (longer) modified reconstructed paths while two of the reconstructed paths (namely Main Street and Fourth Avenue) are trimmed to create (shorter) modified reconstructed paths;

FIG. 12 schematically depicts a run-time label cache for caching reconstructed map features and respective labels; and

FIG. 13 shows how an entry in the run-label label cache (e.g. "Second Avenue") is dynamically updated (i.e. modified in real-time) when the map is panned (as it was from FIG. 10 to FIG. 11).

It will be noted that throughout the appended drawings, like features are identified by like reference numerals.

### DESCRIPTION OF PREFERRED EMBODIMENTS

The details and particulars of these aspects of the technology will now be described below, by way of example, with reference to the attached drawings.

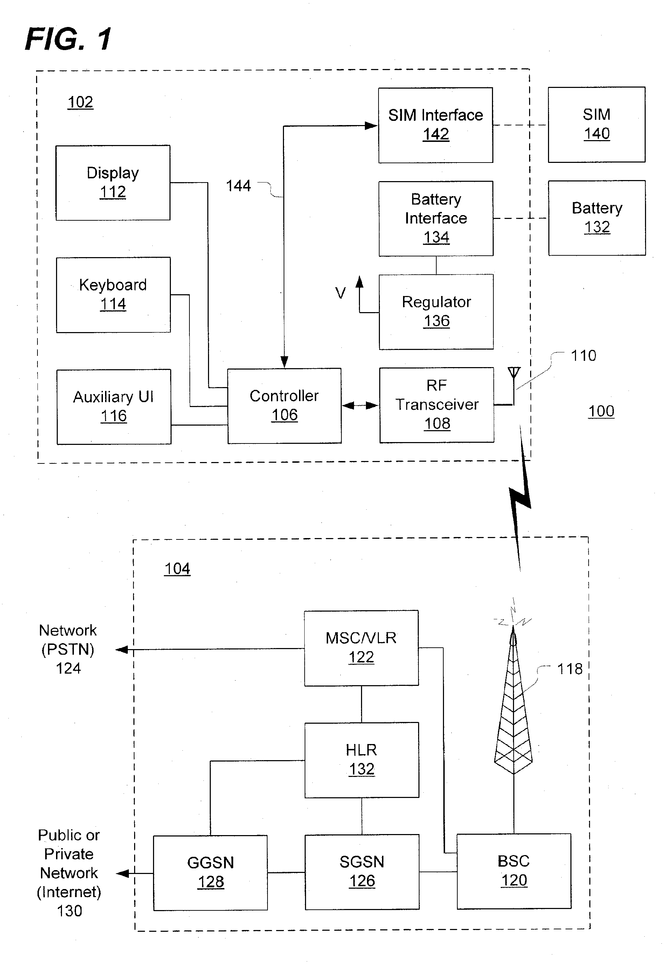

FIG. 1 is a block diagram of a communication system 100 which includes a wireless communications device 102 (also referred to as a mobile communications device) which communicates through a wireless communication network 104. For the purposes of the present specification, the expression "wireless communications device" encompasses not only a wireless handheld, smartphone, cell phone or wireless-enabled laptop but also any mobile communications device or portable communications device such as a satellite phone, wireless-enabled PDA or wireless-enabled MP3 player. In other words, for the purposes of this specification, "wireless" shall be understood as encompassing not only standard cellular or microwave RF technologies, but also any other communications technique that conveys data over the air using an electromagnetic signal.

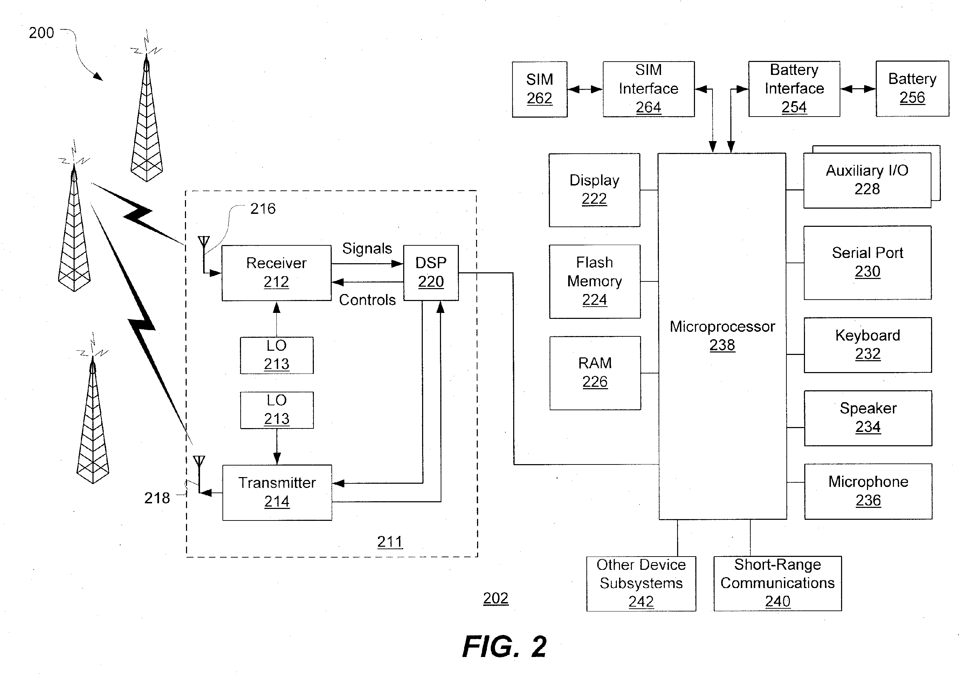

The wireless communications device 102 preferably includes a visual display 112, e.g. an LCD screen, a keyboard 114 (or keypad), and optionally one or more auxiliary user interfaces (UI) 116, each of which is coupled to a controller 106. The controller 106 is also coupled to radio frequency (RF) transceiver circuitry 108 and an antenna 110. Typically, controller 106 is embodied as a central processing unit (CPU) which runs operating system software in a memory device (described later with reference to FIG. 2). Controller 106 normally controls the overall operation of the wireless communications device 102, whereas signal processing operations associated with communications functions are typically performed in the RF transceiver circuitry 108. Controller 106 interfaces with the display screen 112 to display received information, stored information, user inputs, and the like. Keyboard/keypad 114, which may be a telephone-type keypad or a full QWERTY keyboard, is normally provided for entering commands and data.

The wireless communications device 102 sends communication signals to and receives communication signals from network 104 over a wireless link via antenna 110. RF transceiver circuitry 108 performs functions similar to those of station 118 and Base Station Controller (BSC) 120, including, for example, modulation and demodulation, encoding and decoding, and encryption and decryption. It will be apparent to those skilled in the art that the RF transceiver circuitry 108 will be adapted to the particular wireless network or networks in which the wireless communications device is intended to operate.

The wireless communications device 102 includes a battery interface 134 for receiving one or more rechargeable batteries 132. Battery 132 provides electrical power to electrical circuitry in the device 102, and battery interface 134 provides for a mechanical and electrical connection for battery 132. Battery interface 134 is couple to a regulator 136 which regulates power to the device. When the wireless device 102 is fully operationally, an RF transmitter of RF transceiver circuitry 108 is typically keyed or turned on only when it is sending to network, and is otherwise turned off to conserve resources. Similarly, an RF receiver of RF transceiver circuitry 108 is typically periodically turned off to conserve power until it is needed to receive signals or information (if at all) during designated time periods.

Wireless communications device 102 may operate using a Subscriber Identity Module (SIM) 140 which is connected to or inserted in the wireless communications device 102 at a SIM interface 142. SIM 140 is one type of a conventional "smart card" used to identify an end user (or subscriber) of wireless device 102 and to personalize the device, among other things. By inserting the SIM card 140 into the wireless communications device 102, an end user can have access to any and all of his subscribed services. SIM 140 generally includes a processor and memory for storing information. Since SIM 140 is coupled to SIM interface 142, it is coupled to controller 106 through communication lines 144. In order to identify the subscriber, SIM 140 contains some user parameters such as an International Mobile Subscriber Identity (IMSI). An advantage of using SIM 140 is that end users are not necessarily bound by any single physical wireless device. SIM 140 may store additional user information for the wireless device as well, including datebook (calendar) information and recent call information.

The wireless communications device 102 may consist of a single unit, such as a data communication device, a cellular telephone, a Global Positioning System (GPS) unit, a multiple-function communication device with data and voice communication capabilities, a wireless-enabled personal digital assistant (PDA), or a wireless-enabled laptop computer. Alternatively, the wireless communications device 102 may be a multiple-module unit comprising a plurality of separate components, including but in no way limited to a computer or other device connected to a wireless modem. In particular, for example, in the block diagram of FIG. 1, RF circuitry 108 and antenna 110 may be implemented as a radio modem unit that may be inserted into a port on a laptop computer. In this case, the laptop computer would include display 112, keyboard 114, one or more auxiliary UIs 116, and controller 106 embodied as the computer's CPU.

The wireless communications device 102 communicates in and through a wireless communication network 104. The wireless communication network may be a cellular telecommunications network. In the example presented in FIG. 1, wireless network 104 is configured in accordance with Global Systems for Mobile communications (GSM) and General Packet Radio Service (GPRS) technologies. Although wireless communication network 104 is described herein as a GSM/GPRS-type network, any suitable network technologies may be utilized such as Code Division Multiple Access (CDMA), Wideband CDMA (WCDMA), whether 2G, 3G, or Universal Mobile Telecommunication System (UMTS) based technologies. In this example, the GSM/GPRS wireless network 104 includes a base station controller (BSC) 120 with an associated tower station 118, a Mobile Switching Center (MSC) 122, a Home Location Register (HLR) 132, a Serving General Packet Radio Service (GPRS) Support Node (SGSN) 126, and a Gateway GPRS Support Node (GGSN) 128. MSC 122 is coupled to BSC 120 and to a landline network, such as a Public Switched Telephone Network (PSTN) 124. SGSN 126 is coupled to BSC 120 and to GGSN 128, which is, in turn, coupled to a public or private data network 130 (such as the Internet). HLR 132 is coupled to MSC 122, SGSN 126 and GGSN 128.

Tower station 118 is a fixed transceiver station. Tower station 118 and BSC 120 may be referred to as transceiver equipment. The transceiver equipment provides wireless network coverage for a particular coverage area commonly referred to as a "cell". The transceiver equipment transmits communication signals to and receives communication signals from wireless communications devices 102 within its cell via station 118. The transceiver equipment normally performs such functions as modulation and possibly encoding and/or encryption of signals to be transmitted to the wireless communications device in accordance with particular, usually predetermined, communication protocols and parameters. The transceiver equipment similar demodulates and possibly decodes and decrypts, if necessary, any communication signals received from the wireless communications device 102 transmitting within its cell. Communication protocols and parameters may vary between different networks. For example, one network may employ a different modulation scheme and operate at different frequencies than other networks.

The wireless link shown in communication system 100 of FIG. 1 represents one or more different channels, typically different radio frequency (RF) channels, and associated protocols used between wireless network 104 and wireless communications device 102. An RF channel is a limited resource that must be conserved, typically due limits in overall bandwidth and a limited battery power of the wireless device 102. Those skilled in the art will appreciate that a wireless network in actual practice may include hundreds of cells, each served by a station 118, depending upon desired overall expanse of network coverage. All pertinent components may be connected by multiple switches and routers (not shown), controlled by multiple network controllers.

For all wireless communications devices 102 registered with a network operator, permanent data (such as the user profile associated with each device) as well as temporary data (such as the current location of the device) are stored in the HLR 132. In case of a voice call to the wireless device 102, the HLR 132 is queried to determine the current location of the device 102. A Visitor Location Register (VLR) of MSC 122 is responsible for a group of location areas and stores the data of those wireless devices that are currently in its area of responsibility. This includes parts of the permanent data that have been transmitted from HLR 132 to the VLR for faster access. However, the VLR of MSC 122 may also assign and store local data, such as temporary identifications. Optionally, the VLR of MSC 122 can be enhanced for more efficient co-ordination of GPRS and non-GPRS services and functionality (e.g. paging for circuit-switched calls which can be performed more efficiently via SGSN 126, and combined GPRS and non-GPRS location updates).

Serving GPRS Support Node (SGSN) 126 is at the same hierarchical level as MSC 122 and keeps track of the individual locations of wireless devices 102. SGSN 126 also performs security functions and access control. Gateway GPRS Support Node (GGSN) 128 provides internetworking with external packet-switched networks and is connected with SGSNs (such as SGSN 126) via an IP-based GPRS backbone network. SGSN 126 performs authentication and cipher setting procedures based on the same algorithms, keys, and criteria as in existing GSM. In conventional operation, cell selection may be performed autonomously by wireless device 102 or by the transceiver equipment instructing the wireless device to select a particular cell. The wireless device 102 informs wireless network 104 when it reselects another cell or group of cells, known as a routing area.

In order to access GPRS services, the wireless device 102 first makes its presence known to wireless network 104 by performing what is known as a GPRS "attach". This operation establishes a logical link between the wireless device 102 and SGSN 126 and makes the wireless device 102 available to receive, for example, pages via SGSN, notifications of incoming GPRS data, or SMS messages over GPRS. In order to send and receive GPRS data, the wireless device 102 assists in activating the packet data address that it wants to use. This operation makes the wireless device 102 known to GGSN 128; internetworking with external data networks can thereafter commence. User data may be transferred transparently between the wireless device 102 and the external data networks using, for example, encapsulation and tunnelling. Data packets are equipped with GPRS-specific protocol information and transferred between wireless device 102 and GGSN 128.

Those skilled in the art will appreciate that a wireless network may be connected to other systems, possibly including other networks, not explicitly shown in FIG. 1. A network will normally be transmitting at very least some sort of paging and system information on an ongoing basis, even if there is no actual packet data exchanged. Although the network consists of many parts, these parts all work together to result in certain behaviours at the wireless link.

FIG. 2 is a detailed block diagram of an exemplary wireless communications device 202. The wireless device 202 is preferably a two-way communication device having at least voice and advanced data communication capabilities, including the capability to communicate with other computer systems. Depending on the functionality provided by the wireless device 202, it may be referred to as a data messaging device, a two-way pager, a cellular telephone with data message capabilities, a wireless Internet appliance, or a data communications device (with or without telephony capabilities). The wireless device 202 may communicate with any one of a plurality of fixed transceiver stations 200 within its geographic coverage area.

The wireless communications device 202 will normally incorporate a communication subsystem 211, which includes a receiver 212, a transmitter 214, and associated components, such as one or more (preferably embedded or internal) antenna elements 216 and 218, local oscillators (LO's) 213, and a processing module such as a digital signal processor (DSP) 220. Communication subsystem 211 is analogous to RF transceiver circuitry 108 and antenna 110 shown in FIG. 1. As will be apparent to those skilled in the field of communications, the particular design of communication subsystem 211 depends on the communication network in which the wireless device 202 is intended to operate.

The wireless device 202 may send and receive communication signals over the network after required network registration or activation procedures have been completed. Signals received by antenna 216 through the network are input to receiver 212, which may perform common receiver functions as signal amplification, frequency down conversion, filtering, channel selection, and the like, and, as shown in the example of FIG. 2, analog-to-digital (A/D) conversion. A/D conversion of a received signal allows more complex communication functions such as demodulation and decoding to performed in the DSP 220. In a similar manner, signals to be transmitted are processed, including modulation and encoding, for example, by DSP 220. These DSP-processed signals are input to transmitter 214 for digital-to-analog (D/A) conversion, frequency up conversion, filtering, amplification and transmission over communication network via antenna 218. DSP 220 not only processes communication signals, but also provides for receiver and transmitter control. For example, the gains applied to communication signals in receiver 212 and transmitter 214 may be adaptively controlled through automatic gain control algorithms implemented in the DSP 220.

Network access is associated with a subscriber or user of the wireless device 202, and therefore the wireless device requires a Subscriber Identity Module or SIM card 262 to be inserted in a SIM interface 264 in order to operate in the network. SIM 262 includes those features described in relation to FIG. 1. Wireless device 202 is a battery- powered device so it also includes a battery interface 254 for receiving one or more rechargeable batteries 256. Such a battery 256 provides electrical power to most if not all electrical circuitry in the device 102, and battery interface provides for a mechanical and electrical connection for it. The battery interface 254 is coupled to a regulator (not shown) which provides a regulated voltage V to all of the circuitry.

Wireless communications device 202 includes a microprocessor 238 (which is one implementation of controller 106 of FIG. 1) which controls overall operation of wireless device 202. Communication functions, including at least data and voice communications, are performed through communication subsystem 211. Microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240, and any other device subsystems generally designated at 242. Some of the subsystems shown in FIG. 2 perform communication-related functions, whereas other subsystems may provide "resident" or on-board functions. Notably, some subsystems, such as keyboard 232 and display 222, for example, may be used for both communication-related functions, such as entering a text message for transmission over a communication network, and device-resident functions such as a calculator or task list. Operating system software used by the microprocessor 238 is preferably stored in a persistent (non-volatile) store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

Microprocessor 238, in addition to its operating system functions, enables execution of software applications on the wireless device 202. A predetermined set of applications which control basic device operations, including at least data and voice communication applications, will normally be installed on the device 202 during its manufacture. For example, the device may be preloaded with a personal information manager (PIM) having the ability to organize and manage data items relating to the user's profile, such as e-mail, calendar events, voice mails, appointments, and task items. Naturally, one or more memory stores are available on the device 202 and SIM 256 to facilitate storage of PIM data items and other information.

The PIM application preferably has the ability to send and receive data items via the wireless network. PIM data items may be seamlessly integrated, synchronized, and updated via the wireless network, with the wireless device user's corresponding data items stored and/or associated with a host computer system thereby creating a mirrored host computer on the wireless device 202 with respect to such items. This is especially advantageous where the host computer system is the wireless device user's office computer system. Additional applications may also be loaded into the memory store(s) of the wireless communications device 202 through the wireless network, the auxiliary I/O subsystem 228, the serial port 230, short-range communications subsystem 240, or any other suitable subsystem 242, and installed by a user in RAM 226 or preferably a non-volatile store (not shown) for execution by the microprocessor 238. Such flexibility in application installation increases the functionality of the wireless device 202 and may provide enhanced onboard functions, communication-related functions or both. For example, secure communication applications may enable electronic commerce functions and other such financial transactions to be performed using the wireless device 202.

In a data communication mode, a received signal such as a text message, an e-mail message, or a web page download will be processed by communication subsystem 211 and input to microprocessor 238. Microprocessor 238 will preferably further process the signal for output to display 222 or alternatively to auxiliary I/O device 228. A user of the wireless device 202 may also compose data items, such as email messages, for example, using keyboard 232 in conjunction with display 222 and possibly auxiliary I/O device 228. Keyboard 232 is preferably a complete alphanumeric keyboard and/or telephone-type keypad. These composed items may be transmitted over a communication network through communication subsystem 211.

For voice communications, the overall operation of the wireless communications device 202 is substantially similar, except that the received signals would be output to speaker 234 and signals for transmission would be generated by microphone 236. Alternative voice or audio I/O subsystems, such as a voice message recording subsystem, may also be implemented on the wireless device 202. Although voice or audio signal output is preferably accomplished primarily through speaker 234, display 222 may also be used to provide an indication of the identity of the calling party, duration on a voice call, or other voice call related information, as some examples.

Serial port 230 in FIG. 2 is normally implemented in a personal digital assistant (PDA)-type communication device for which synchronization with a user's desktop computer is a desirable, albeit optional, component. Serial port 230 enables a user to set preferences through an external device or software application and extends the capabilities of wireless device 202 by providing for information or software downloads to the wireless device 202 other than through the wireless network. The alternate download path may, for example, be used to load an encryption key onto the wireless device 202 through a direct and thus reliable and trusted connection to thereby provide secure device communications.

Short-range communications subsystem 240 of FIG. 2 is an additional optional component which provides for communication between mobile station 202 and different systems or devices, which need not necessarily be similar devices. For example, subsystem 240 may include an infrared device and associated circuits and components, or a Bluetooth® communication module to provide for communication with similarly-enabled systems and devices.

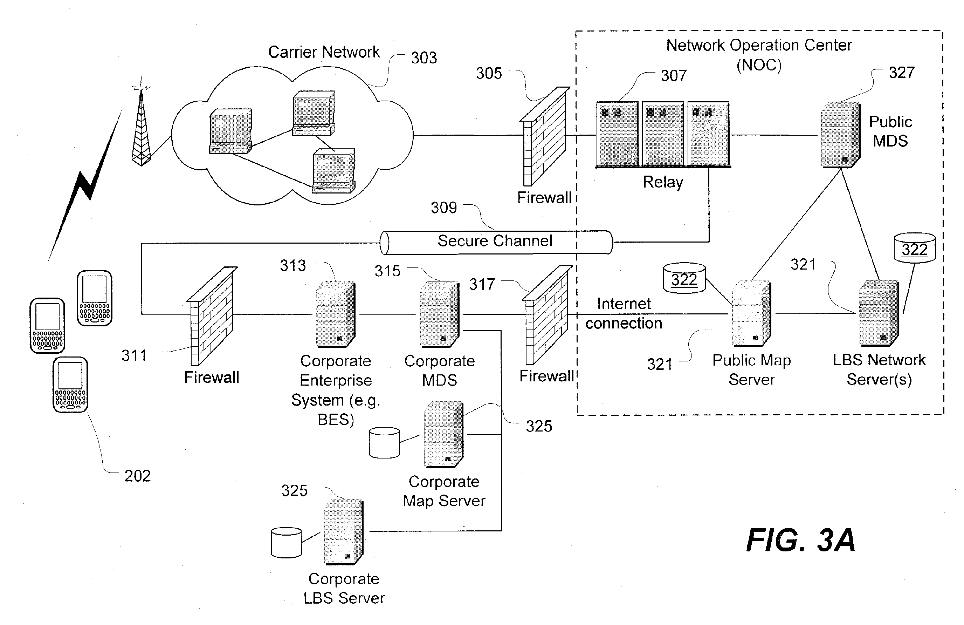

FIG. 3A is a system diagram of exemplary network components which can be used to provide mapping functionality in the wireless communication devices of FIGS. 1 and 2. The mapping functionality is enabled using a mapping application stored in a memory of the wireless communications device and which can be executed by the processor of the device to render visual maps on the display screen of the device. As shown in this exemplary network configuration, wireless communications devices 202 are connected over a mobile carrier network 303 for communication through a firewall 305 to a relay 307. A request for map data from any one of the wireless communications devices 202 is received at relay 307 and passed via a secure channel 309 through firewall 311 to a corporate enterprise server 313 and corporate mobile data system (MDS) server 315. The request is then passed via firewall 317 to a public map server and/or to a public location-based service (LBS) server 321 which provides the mapping and/or location-based services (LBS) in response to the request. The network may include a plurality of such map servers and/or LBS servers where requests are distributed and processed through a load distributing server. The map/LBS data may be stored on this network server 321 in a network database 322, or may be stored on a separate map server and/or LBS server (not shown). Private corporate data stored on corporate map/LBS server 325 may be added to the public data via corporate MDS server 315 on the secure return path to the wireless device 202. Alternatively, where no corporate servers are provided, the request from the wireless device 202 may be passed via relay 307 to a public MDS server 327, which sends the request to the public map/LBS server 321 providing map data or other local-based service in response to the request. For greater clarity, it should be understood that the wireless devices can obtain map data from a "pure" map server offering no location-based services, from an LBS server offering location-based services in addition to map content, or from a combination of servers offering map content and LBS.

Map data can be organized, for example, in a Maplet data structure (or in another map data structure) that contains all of the graphic and labelled content associated within a geographic area (e.g. map features such as restaurants (point features), streets (line features) or lakes (polygon features)). Maplets are structured in Layers of Data Entries ("DEntries") identified by a "Layer ID" to enable data from different sources to be deployed to the device and meshed for proper rendering. Each DEntry is representative of one or more artefact or label (or a combination of both) and includes coordinate information (also referred to as a "bounding box" or "bounding area") to identify the area covered by the DEntry and a plurality of data points that together represent the artefact, feature or label. For example, a DEntry may be used to represent a street on a city map (or a plurality of streets), wherein the various points within the DEntry are separated into different parts representing various portions of the artefact or map feature (e.g. portions of the street). A wireless device may issue a request for the map server to download only those DEntries that are included within a specified area or bounding box representing an area of interest that can be represented by, for example, a pair of bottom left, top right coordinates.

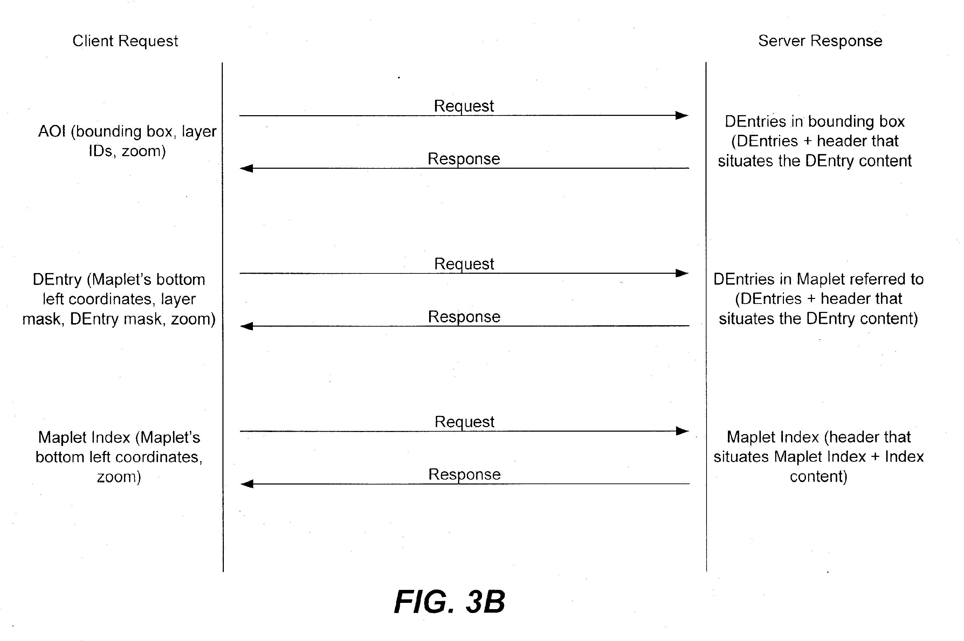

As depicted in FIG. 3B, the wireless communications device issues one or more AOI (Area of Interest) requests, DEntry or data requests and Maplet Index requests to the map server for selective downloading of map data based on user context. Thus, rather than transmitting the entire map data for an area in reply to each request from the device (which burdens the wireless link), local caching may be used in conjunction with context filtering of map data on the server. For example, if a user's wireless device is GPS enabled and the user is traveling in an automobile at 120 km/h along a freeway then context filtering can by employed to prevent downloading of map data relating to passing side streets. Or, if the user is traveling in an airplane at 30,000 feet, then context filtering can be employed to prevent downloading of map data for any streets whatsoever. Also, a user's context can be defined, for example, in terms of occupation, e.g. a user whose occupation is a transport truck driver can employ context filtering to prevent downloading of map data for side streets on which the user's truck is incapable of traveling, or a user whose occupation is to replenish supplied of soft drink dispensing machines can employ context filtering to download public map data showing the user's geographical area of responsibility with irrelevant features such as lakes and parks filtered out and private map data containing the location of soft drink dispensing machines superimposed on the public map data.

The Maplet Index request results in a Maplet Index (i.e. only a portion of the Maplet that provides a table of contents of the map data available within the Maplet rather than the entire Maplet) being downloaded from the map server to the device, thereby conserving OTA(Over-the-Air) bandwidth and device memory caching requirements. The Maplet Index conforms to the same data structure as a Maplet, but omits the data points. Consequently, the Maplet Index is small (e.g. 300-400 bytes) relative to the size of a fully populated Maplet or a conventional bit map, and inclues DEntry bounding boxes and attributes (size, complexity, etc.) for all artefacts within the Maplet. As the field of view changes (e.g. for a location-aware device that displays a map while moving), the device (client) software assesses whether or not it needs to download additional data from the server. Thus, if the size attribute or complexity attribute of an artefact that has started to move into the field of view of the device (but is not yet being displayed) is not relevant to the viewer's current context, then the device can choose not to display that portion of the artifact. On the other hand, if the portion of the artefact is appropriate for display, then the device accesses its cache to determine whether the DEntries associated with that portion of the artefact have already been downloaded, in which case the cached content is displayed. Otherwise, the device issues a request for the map server to download all the of the DEntries associated with the artifact portion.

By organizing the Maplet data structure in Layers, it is possible to seamlessly combine and display information obtained from public and private databases. For example, it is possible for the device to display an office building at a certain address on a street (e.g. a 1^{st} z-order attribute from public database), adjacent a river (e.g. a 2^{nd} z-order attribute from public database), with a superimposed floor plane of the building to show individual offices (e.g. 11^{th} z-order attribute from a private database, accessible through a firewall).

Referring back to FIG. 3A, within the network having map server(s) and/or LBS server(s) 321 and database(s) 322 accessible to it, all of the map data for the entire world is divided and stored as a grid according to various levels of resolution (zoom), as set forth below in Table A. Thus, a single A-level Maplet represents a 0.05 x 0.05 degree grid area; a single B-level Maplet represents a 0.5 x 0.5 degree grid area; a single C-level Maplet represents a 5 x 5 degree grid area; a single D-level Maplet represents a 50 x 50 degree grid area; and a single E level Maplet represents the entire world in a single Maplet. It is understood that Table A is only an example of a particular Maplet grid division; different grid divisions having finer or coarser granularity may, of courser, be substituted. A Maplet includes a set of layers, with each layer containing a set of DEntries, and each DEntry containing a set of data points.

**Table A:**

| | | | | |
|---|---|---|---|---|
| **Level** | **Grid (degrees)** | **# of Maplets to cover the World** | **# of Maplets to cover North America** | **# of Maplets to cover Europe** |
| A | 0.05 x 0.05 | 25,920,000 | 356,000 | 100,000 |
| B | 0.5 x 0.5 | 259,200 | 6,500 | 1000 |
| C | 5 x 5 | 2,592 | 96 | 10 |
| D | 50 x 50 | 32 | 5 | 5 |
| E | World | 1 | 1 | 1 |

As mentioned above, three specific types of requests may be generated by a wireless communications device (i.e. the client) - AOI requests, DEntry requests and Maplet Index requests. The requests may be generated separately or in various combinations, as discussed in greater detail below. An AOI (area of interest) request calls for all DEntries in a given area (bounding box) for a predetermined or selected set of z-order Layers. The AOI request is usually generated when the device moves to a new area so as to fetch DEntries for display before the device client knows what is available in the Maplet. The Maplet Index has the exact same structure as a Maplet but does not contain complete DEntries (i.e. the data Points actually representing artifacts and labels are omitted). Thus, a Maplet Index defines what Layers and DEntries are available for a given Maplet. A data or DEntry request is a mechanism to bundle together all of the required Dentries for a given Maplet.

Typically, AOI and Maplet Index requests are paired together in the same message, although they need not be, while DEntry requests are generated most often. For example, when a wireless device moves into an area for which no information has been stored on the device client, the Maplet Index request returns a Maplet Index that indicates what data the client can specifically request from the server 321, while the AOI request returns any DEntries within the area of interest for the specified Layers (if they exist). In the example requests shown on Figure 3B, the desired Maplet is identified within a DEntry request by specifying the bottom-left Maplet coordinate. In addition, the DEntry request may include a layer mask so that unwanted Layers are not downloaded, a DEntry mask so that unwanted data Points are not downloaded, and zoom values to specify a zoom level for the requested DEntry. Once the device client has received the requested Maplet Index, the client typically then issues multiple DEntry requests to ask for specific DEntries (since the client knows all of the specific DEntries that are available based on the Maplet Index).

In this particular implementation, a collection of 20 x 20 A-level Maplets (representing a 1 x 1 degree square) is compiled into a Maplet Block File (.mbl). An .mbl file contains a header which specifies the offset and length of each Maplet in the .mbl file. The same 20 x 20 collection of Maplet index data is compiled into a Maplet Index file (.mbx). The .mbl and .mbx file structures are set forth in Tables B and C, respectively.

**Table B:**

| **Address Offset** | **Offset** | **Length** |
|---|---|---|
| 0x000 | Maplet #0 Offset (4 bytes) | Maplet #0 Length (4 bytes) |
| 0x008 | Maplet #1 Offset | Maplet #1 Length |
| 0x010 | Maplet #2 Offset | Maplet #2 Length |
| ... | ... | ... |
| 0xC78 | Maplet #399 Offset | Maplet #399 Length |
| 0xC80 | Beginning of Maplet #0 | |
| 0xC80 + Size of Maplet #0 | Beginning of Maplet #1 | |
| 0xC80 + Size of Maplet #0 + #1 | Beginning of Maplet #2 | |
| ... | ... | |
| 0xC80 + Σ of Size of Maplets (#0 : #398) | Beginning of Maplet #399 | |

In Table B, the offset of Maplet #0 is 0x0000_0000 since, in this particular example, the data structure is based on the assumption that the base address for the actual Maplet data is 0x0000_0C80. Therefore the absolute address for Maplet #0 data is: Maplet #0 Address = Base Address (0x0000_0C80) + Maplet #0 Offset (0x0000_0000), and additional Maplet addresses are calculated as: Maplet #(n + 1) Offset = Maplet #(n) Offset + Maplet #(n) Length. If a Maplet has no data or does not exist, the length parameter is set to zero (0x0000_0000).

**Table C:**

| **Address Offset** | **Offset (4 bytes)** | **Length (4 bytes)** |
|---|---|---|
| 0x000 | Maplet Index #0 Offset | Maplet Index #0 Length |
| Ox008 | Maplet Index #1 Offset | Maplet Index #1 Length |
| Ox010 | Maplet Index #2 Offset | Maplet Index #2 Length |
| ... | ... | ... |
| 0xC78 | Maplet Index #399 Offset | Maplet Index #399 Length |
| 0xC80 | Beginning of Maplet Index #0 | |
| 0xC80 + Size of Maplet Index #0 | Beginning of Maplet Index #1 | |
| 0xC80 + Size of Maplet Index #0 + #1 | Beginning of Maplet Index #2 | |
| ... | ... | |
| 0xC80 + Σ of Size of Maplet Indices (#0 : #399) | Beginning of Maplet Index #399 | |

In Table C, the offset of Maplet Index #0 is 0x0000_0000 since, according to an exemplary embodiment the data structure is based on the assumption that the base address for the actual Maplet index data is 0x0000_0C80. Therefore, the absolute address for Maplet Index #0 data is: Maplet Index #0 Address = Base Address (0x0000_0C80) + Maplet Index #0 Offset (0x0000_0000), and additional Maplet index addresses are calculated as: Maplet Index #(n + 1) Offset = Maplet Index #(n) Offset + Maplet Index #(n) Length. If a Maplet Index has no data or does not exist, the length parameter is set to zero (0x0000_0000).

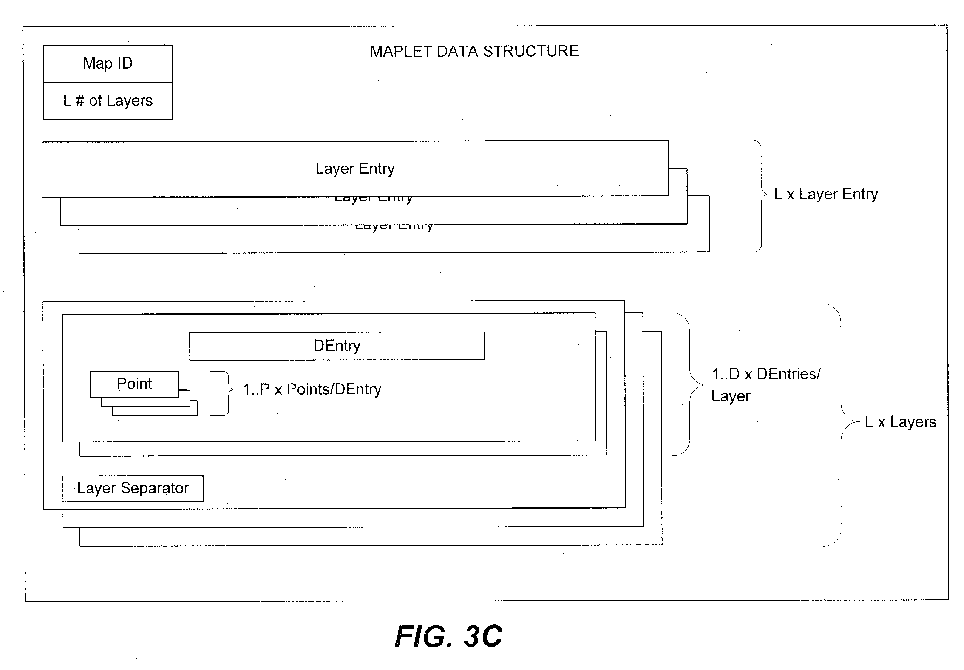

FIG. 3C and Table D (below), in combination, illustrate, by way of example only, a basic Maplet data structure. Generally, as noted above, the Maplet data structure can be said to include a Maplet Index (i.e. an index of the DEntries, each of which is representative of either an artifact or a label or both) together with data Points for each DEntry that actually form such artifacts and labels. In this example, each Maplet includes a Map ID (e.g. OxA1B1C1D1), the # of Layers in the Maplet, and a Layer Entry for each Layer. The Map ID identifies the data as a valid Maplet, and according to one alternative, may also be used to identify a version number for the data. The # of Layers is an integer which indicates the number of Layers (and therefore Layer Entries) in the Maplet. Each Layer Entry defines rendering attributes and is followed by a list of DEntries for each Layer. The above forms a Maplet Index. For a complete Maplet, each DEntry contains a set of data Points (referred to herein as oPoints) or Labels). It will be noted that Layers can have multiple DEntries and the complete list of DEntries and Points are grouped by Layer and separated by a Layer Separator (e.g. hex value 0xEEEEEEEE). In this example, each Layer Entry is 20 bytes long, and a DEntry is 12 bytes long. However, the number of Layers, number of DEntries per Layer and the number of Points per DEntry depends on the map data and is generally variable.

Table D provides a high "byte-level" description of a Maplet for this example.

**Table D:**

| Data | | Quantity | Total # of Bytes |
|---|---|---|---|
| Map ID | | 1 | 4 bytes |
| # of Layers | | 1 | 4 bytes |
| Layer Entries | | # of Layers | 20 bytes x (# of Layers) |
| DEntry of a Layer | x (# of DEntries in a Layer) | # of Layers | 12 bytes x (Σ of the # of DEntries in each Layer) + |
| Points for DEntry of a Layer | | | 4 bytes x (Σ of the # of Points in each DEntry in each Layer) + |
| Layer Separator | | | 4 bytes x (# of Layers) |

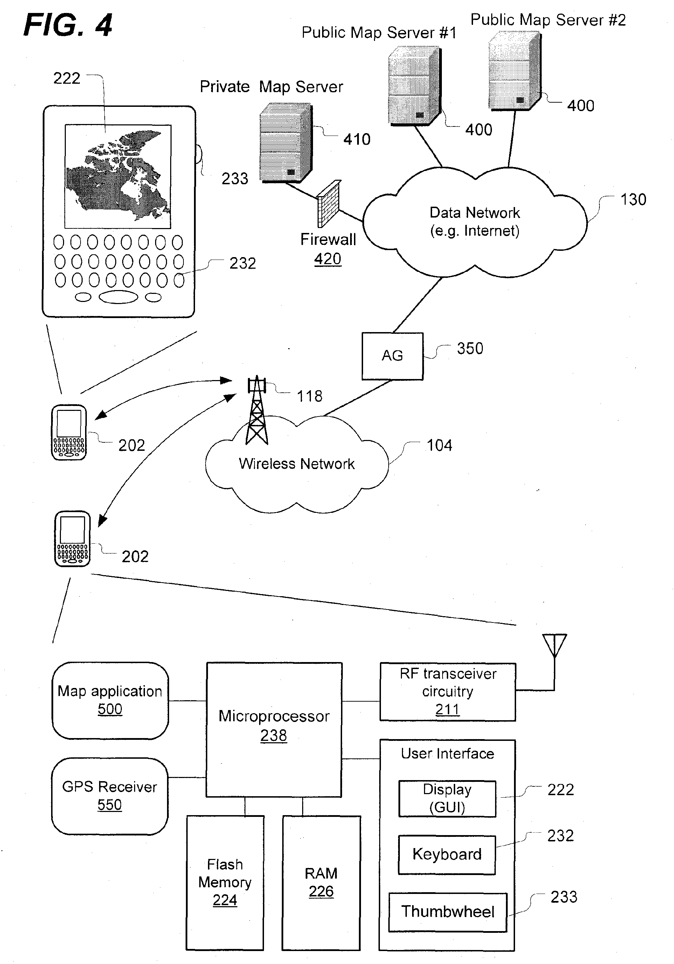

By way of a further example, the wireless network 200 depicted in FIG. 4 can include an applications gateway (AG) 350 for optimizing data flow for onboard applications such as a mapping application 500 stored in memory (e.g. stored in a flash memory 224) and executable by the microprocessor 238 of the wireless device 202.

As shown in FIG. 4, the wireless network 200 hosts a plurality of handheld wireless communications devices 202 (such as the BlackBerry^{™} by Research in Motion Limited) having voice and data capabilities (for both e-mail and web browsing) as well as a full QWERTY keyboard. These wireless communications devices 202 can access Web-based map data on public map servers 400 hosted on the Internet or other data network 130 via the applications gateway (AG) 350 which mediates and optimizes data flow between the wireless network 200 and the data network by performing various mappings, compressions and optimizations on the data.

The map server extracts generic map content from a Geographical Information Systems (GIS) map database (e.g. Navtech®, TelAtlas®, etc.) at a specified level of resolution (zoom level). Custom graphics associated with the query, such as highlighted route, pushpin for current position or street address, etc. are post-processed and merged by the server with the generic map content. Relevant screen graphics are then labelled, and the merged map graphic is compressed and delivered to the device for display.

In operation, a user of the wireless communications device 202 uses an input device such as keyboard 232 and/or thumbwheel 233 to cause the microprocessor 238 to open the map application 500 stored in the memory 224. Using the keyboard 232 and thumbwheel 233, the user specifies a map location on the map application 500. In response to this request/command, the microprocessor 238 instructs the RF transceiver circuitry 211 to transmit the request over the air through the wireless network 104. The request is processed by the AG 350 and forwarded into the data network (Internet) using standard packet-forwarding protocols to one or more of the public and/or private map servers 400, 410. Accessing a private map server 410 behind a corporate firewall 420 was described above with reference to FIG. 3A. Map data downloaded from these one or more map servers 400, 410 is then forwarded in data packets through the data network and mapped/optimized by the AG 350 for wireless transmission through the wireless network 104 to the wireless communications device 202 that originally sent the request.

The downloaded map data can be cached locally in RAM 226, and displayed on the display 222 or graphical user interface (GUI) of the device after the map application 500 reconstructs or "stitches together" portions of features or constituent path segments to generate a reconstructed map feature or path, as will elaborated below, so that a single instance of the label can be centrally rendered for the reconstructed feature or path (provided it does not collide with another label of higher priority). If a further request is made by the user (or if the user wants a change in the field of view by zooming or panning), the device will check whether the data required can be obtained from the local cache (RAM 226). If not, the device issues a new request to the one or more map servers 400, 410 in the same manner as described above.

As described earlier, map data can optionally be downloaded first as a Maplet Index enabling the user to then choose which DEntries listed in the Index to download in full. Furthermore, as described earlier, the map application can include user-configurable context filtering that enables the user to filter out unwanted map features or artifacts by not downloading specific DEntries corresponding to those unwanted map features or artifacts.

As a variant, the wireless communications device can optionally include a Global Positioning System (GPS) receiver ("GPS chip") 550 for providing location-based services (LBS) to the user in addition to map content. Embedding a GPS chip 550 capable of receiving and processing signals from GPS satellites enable the GPS chip to generate latitude and longitude coordinates, thus making the device "location aware". To obtain local-based services, the map application within the wireless communications device sends a request to the map server for information relating to a city, restaurant, street address, route, etc. If the device is "location aware", the request would include the current location of the device.

In lieu of, or in addition to, GPS coordinates, the location of the device can be determined using triangulation of signals from in-range base towers, such as used for Wireless E911. Wireless Enhanced 911 services enable a cell phone or other wireless device to be located geographically using radiolocation techniques such as (i) angle of arrival (AOA) which entails locating the caller at the point where signals from two towers intersect; (ii) time difference of arrival (TDOA), which uses multilateration like GPS, except that the networks determine the time difference and therefore the distance from each tower; and (iii) location signature, which uses "fingerprinting" to store and recall patterns (such as multipath) which mobile phone signals exhibit at different locations in each cell.

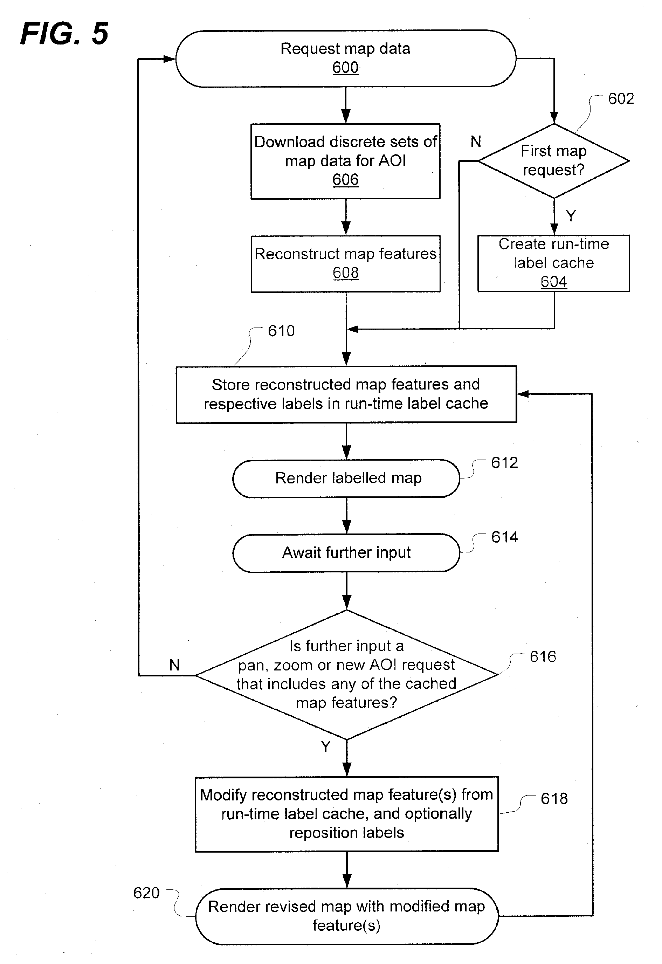

Operation of the systems described above will now be described with reference to the method steps depicted in the flowchart of FIG. 5. This flowchart only represents one implementation of this novel method, and therefore is should be understood that a number of variations on the method depicted are possible.

This novel method generally entails displaying a labelled map on a wireless communications device by creating (at step 604) a run-time label cache in a memory of the wireless communications device, reconstructing (at step 608) a map feature from discrete sets of map data that provide redundant labels for the map feature to thereby generate a reconstructed map feature having only a single instance of the label, storing (at step 610) in the run-time label cache the reconstructed map feature and the single instance of the label associated with the reconstructed map feature. Upon receipt of new map data, the method further entails rendering (at step 620) the labelled map based only partially on the new map data by reusing the reconstructed map feature and the single instance of the label associated with the reconstructed map feature stored in the run-time label cache.

As depicted in the flowchart of FIG. 5, the step 604 of creating a run-time label cache can be performed in parallel to (i.e. substantially simultaneously with) the step 608 of reconstructing the map feature(s), or these steps (604, 608) can be performed sequentially in either order (i.e. first reconstruct features, then create label cache, or vice versa). Preferably, the step 604 of creating the run-time label cache is performed, as shown in FIG. 5, by first checking at step 602 if this is the first request for map data. If this is indeed the first request, then a run-time label cache is created (step 604). If this is not the first request, then the existing run-time label cache can be used (i.e. no further label cache needs to be created, although, an additional label cache could be created, as will be elaborated below). Thus, once the run-time label cache is created the first time, it need not be "recreated" for subsequent requests. However, in some implementations, it may be advantageous to create more than one run-time label cache, for example, where a subsequent map data request is for an entirely different (nonoverlapping) AOI, in which case it may be useful to cache map features for two or more different areas of interest (either in one large cache or in two or more separate caches) so that the user can flip back to the previous map without requiring the device to reconstruct *ab initio* all the map features and recalculate the positioning of all the labels.

As depicted in the particular implementation presented in FIG. 5, this novel method is triggered when map data is requested (at step 600). Requesting map data may involve the wireless device sending a request to a map server over a wireless link or via a wire-line connection. The making of a request for map data may be triggered manually by the device user or automatically by obtaining map data for a default map when the map application on the device is opened or when using a GPS navigation application. The user may manually send a request by specifying an area of interest (AOI) using the map application, e.g. specifying a street address, coordinates of latitude or longitude, or clicking on a location on a world map, etc. In response to this request for map data, the server transmits map data, e.g. in vector format, back to the device. Because the map data is organized in discrete "chunks" or "sets" of data, to get a map of an AOI, the device obtains (e.g. downloads) discrete sets of map data (step 606) and then reassembles or reconstructs the map client-side. For example, discrete sets of map data can be downloaded for adjoining Maplets. For example, if an area of interest overlaps more than one Maplet, then DEntries for the adjoining Maplets are obtained to enable the device to reconstruct the map features that overlap from one Maplet to another. In other cases, the area of interest will be entirely subsumed within one Maplet in which case no reconstruction of map features is necessary, in which case only the desired Layers and DEntries are obtained and then the labels positioned accordingly.

After the step of obtaining discrete sets of map data (step 606), map features (such as, for example, paths) are reconstructed (step 608) by stitching the features together to form a single feature having only a single instance of the label. For the purposes of this specification, "obtaining" map data means receiving or downloading the map data over the air, i.e. over a wireless link, retrieving the map data from a local cache distinct from the run-time label cache, or downloading the map data over a wired connection, or any combination thereof. In other words, obtaining map data may include a step of determining whether the data is already cached locally. If the data is locally cached, the map data is retrieved from the cache. Otherwise, if not all of the map data is cached, then the map data is downloaded over the air or via a wire-line connection.

As further depicted in the flowchart of FIG. 5, the reconstructed map features and associated labels are stored or cached in the run-time label cache at step 610. Thereafter, the device renders the map at step 612. It should be noted that steps 610 and 612 can also occur substantially simultaneously or in the opposite order, i.e. render map, then cache the features and labels.

After the map is rendered, the device awaits further input at step 614. This further input can be received in the form of user input (e.g. a pan command, a zoom command or a new AOI request in the form of a new address, a new set of coordinates, etc.). It should be noted that that the device may also receive new input while the map is being rendered. For example, the user may pan the map even before the device has finished fully rendering the map. Thus, while step 614 is depicted as following step 612, further user input can, in general, be received at any time in this process.

Upon receipt of further input, the device determines at step 616 whether the new input is a pan, zoom or new AOI request that overlaps the previous AOI in that at least one map feature is in common. In other words, if the AOI or bounding box of the subsequent map includes at least one map feature from the current AOI, then this common map feature can be reused from the run-time label cache. In this case, operations proceed to step 618 in which the reconstructed map feature is modified (by trimming or further splicing). The revised map is then rendered with the modified reconstructed map feature (at step 620). The modified reconstructed map feature is then cached at step 610 (by updating the information in the cache accordingly). If, at step 616, it is decided that the further input is entirely new, i.e. there is no map feature in common with the previously rendered AOI, then operations cycle back to step 600 (a new map data request is made). In this case, new no label cache needs to be created so the downloaded map data is reconstructed to form reconstructed map features, and these reconstructed map features are then cached in the run-time label cache. Operations would then proceed as described above.

For the purposes of this specification, "label" includes not only all conventional forms of labels, such as city names, street names, etc, but also any symbols or icons, such as highway number icons, or symbols or icons used to denote airports, tourist information kiosks, campgrounds, ferry crossings, etc. on large scale (regional) maps or restaurants, hotels, bus stations, etc. on city maps.

For the purposes of this specification, "map feature" means a path, road, street, highway or other route and also includes features such as a body of water (river, lake, bay, strait, sea, ocean), an island, a park or other geographical feature that can be rendered from two or more separate sets of map data (i.e. vectors) for which individual labels are provided (and which are thus potentially duplicated upon rendering).

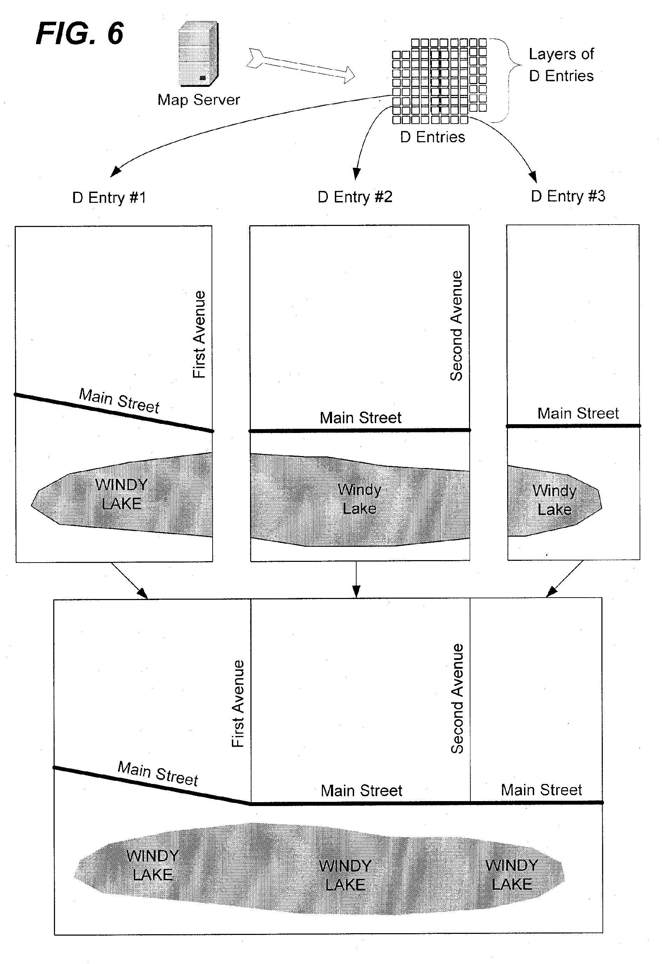

FIGS. 6 to 9C depict stitching techniques used to stitch together map features such as, for example, lakes or paths. These stitching techniques, which are used in the present technology, were introduced in co-pending U.S. Patent Application Serial No. 11/691,257 entitled "STITCHING OF PATHS FOR IMPROVED TEXT-ON-PATH RENDERING OF MAP LABELS" filed March 26, 2007, and are repeated below for the sake of completeness.

FIG. 6 schematically depicts the process of reconstructing ("stitching") paths and/or map features in order to efficiently generate aesthetically-labelled maps for being displayed on wireless communications devices. By way of overview, map data (which includes label data) is obtained from a map server in the form of Data Entries ("D Entries"). Different layers of these D Entries are used to render features of the same type or class. Thus, for example, one layer of D Entries may be for lakes, rivers and bodies of water, while another layer of D Entries may be for highways, roads and streets. This layered implementation enables context-filtering of desired or pertinent map data so that only desired or pertinent features are rendered onscreen.

In the example depicted in FIG. 6, the map is rendered from three separate D Entries (or three separate groups of D Entries from different layers). For the sake of illustration, the three D Entries (D Entry #1, D Entry #2, and D Entry #3) are rendered together to constitute the (composite) map. As each D Entry has its own (independent) label for "Main Street" as well as its own label for "Windy Lake", simply rendering the map data as a composite map would unacceptably result in duplication of the labels, as shown in FIG. 6.

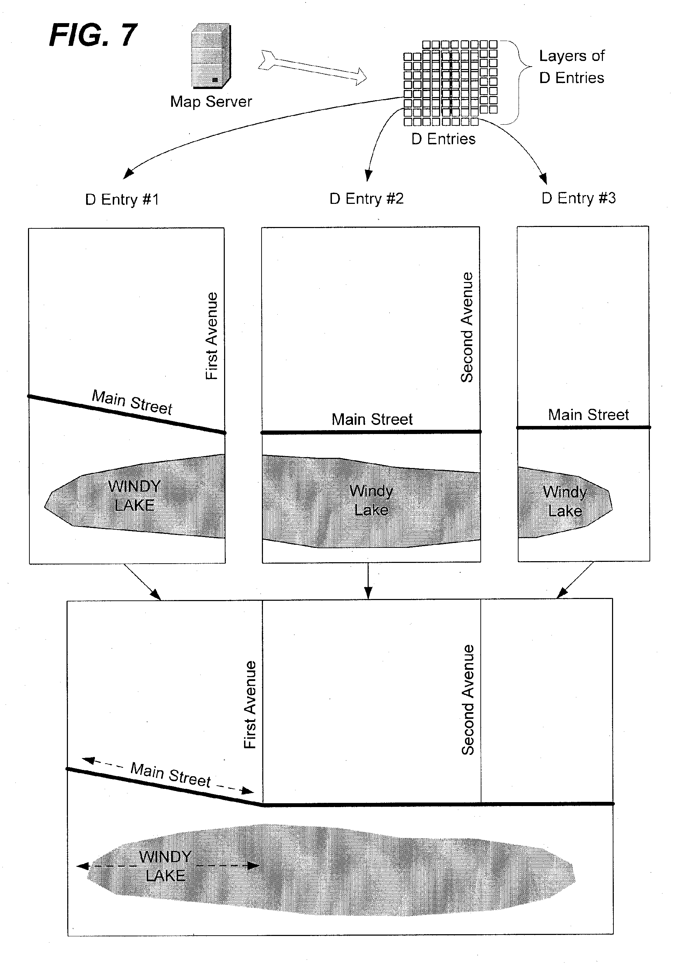

Even if any duplicated labels are suppressed, the resulting map, as depicted in FIG. 7, would not be aesthetically pleasing because only one of the three path labels would appear along its respective path segment (e.g. the Main Street label would appear, say, only along the first path segment), which is not necessarily centered. Similarly, only a single instance of the map feature label (e.g. Windy Lake) would appear on only one of the elements of the feature (e.g. the Windy Lake label would appear, say, on only the first constituent portion of the lake). A corollary problem is that the label can only be displaced over a limited range corresponding to the segment or constituent element (if repositioning is mandated by a collision with another label). Since the label can only be repositioned over a limited range, the resulting labelled map is aesthetically compromised.

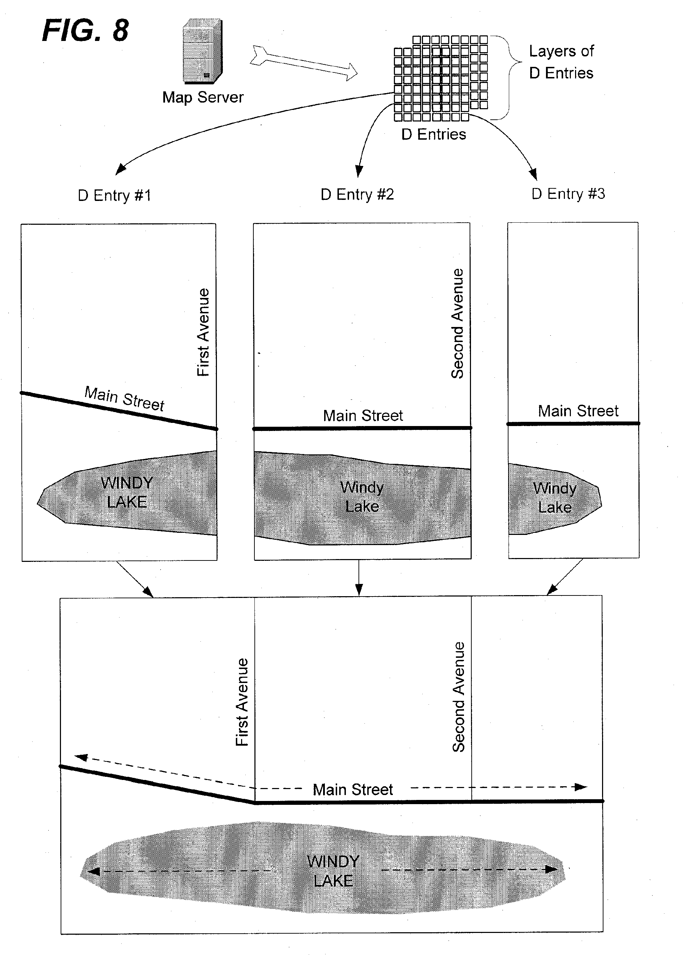

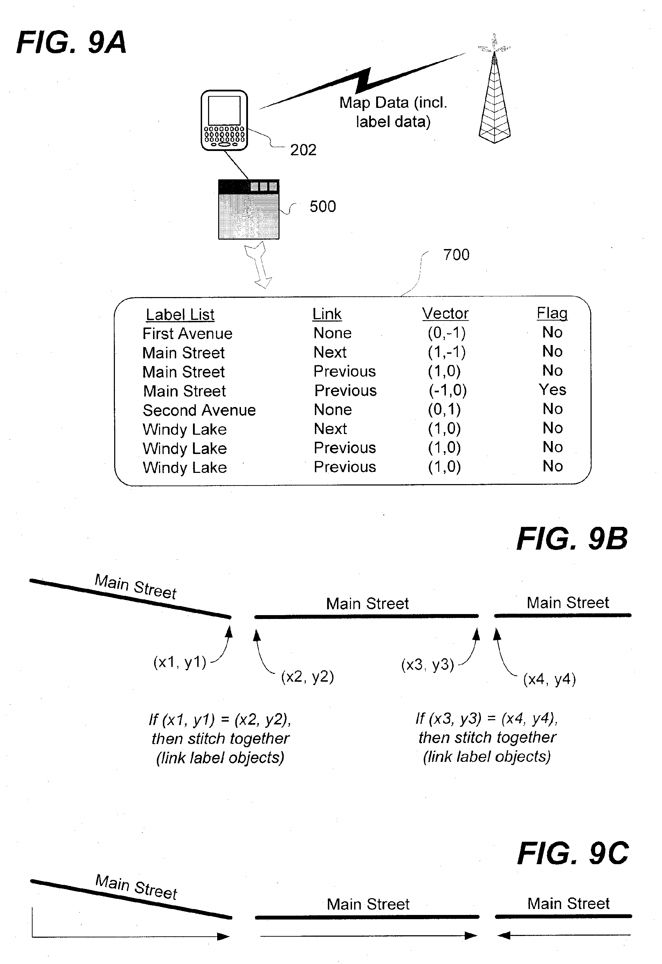

These problems can be overcome by stitching or reconstructing paths (or other map features) to create reconstructed paths (or reconstructed features), as depicted in FIG. 8. Since the path segments have duplicated labels and connecting endpoints, the path segments are stitched/reconstructed to form a single reconstructed path. In one implementation, this reconstruction (stitching) can be accomplished in the manner described in FIGS. 9A-9C. Similarly, other map features (such as the lake in FIG. 8) can be reconstructed, or stitched together, to form a single reconstructed feature.

For the reconstructed path, only a single instance of the label (e.g. "Main Street") is rendered, preferably in a central position vis-à-vis the path (i.e. the most aesthetic place for the label). Since the path has been stitched together to form a single reconstructed path, the label can be displaced anywhere along the reconstructed path. Therefore, as shown by the dashed-line arrows in FIG. 8, the label can be displaced over a much greater range than was previously possible when the label was confined to being rendered somewhere along the limited range of its original path segment. In other words, not only can the label be centered vis-à-vis the "true" (from the viewer's perspective) center of the reconstructed path or feature, but the label can also be displaced substantially to avoid collisions with other labels.

Likewise, for the reconstructed map feature (in this example, the lake), only a single instance of the label (e.g. "Windy Lake") is rendered, preferably in a central, prominent location vis-à-vis the feature, provided it does not collide or interfere with another pre-existing or higher-priority label. Furthermore, because of the reconstruction of the feature, the feature is no longer composed of constituent parts for the purposes of labelling. Accordingly, the label can be displaced over the entire range of the feature, not just over the constituent part with which the label was originally associated. This provides much more leeway in finding a suitable position for a label on the map, i.e. a label position that does not collide or interfere with any other label. In order words, this stitching technique enables labels to be rendered in preferred positions (e.g. centrally, prominently, aesthetically, etc.) while providing maximal leeway for displacing the label in the event that it collides with another (pre-existing or higher-priority) label.

FIG. 9A schematically depicts the generation of a label list 700, in accordance with one implementation of present technology, for determining whether any labels are duplicated in a given set of D Entries that are to be used to render the map. The label list 700, in this implementation, is generated by the map application 500 using label data received wirelessly by the wireless communications device 202.

In the example shown in FIG. 9A, the label list 700 includes the list of label names itself (i.e. a field for storing the name of each label instance), a link field (indicating how, if at all, the label can be linked to any duplicate labels), a vector field (indicating directionality of map data stored in vector format) and a flag field (indicating whether the data vector needs to be reversed to concord with the directionality of a vector of the same label). Although each of these four fields of the label list is described in greater detail below, it should be understood that the details of this label list are presented solely for the purposes of illustration. Persons of ordinary skill in the art will appreciate that other implementations of label lists or equivalent algorithms can be used to determine label redundancy and whether endpoints of the paths or other non-path features of any redundant labels match.

In the example presented in FIG. 9A, the label list 700 includes path labels "First Avenue", "Main Street", and "Second Avenue" as well as any non-path feature labels, i.e. "Windy Lake". As shown, multiple instances of each label appear in the label list 700, representing each instance that one of the D Entries used to render the map carries that particular label. Thus, in this example, the label "Main Street" is listed three times in the label list because each of the D Entries used to create the map contains its own instance of the label "Main Street". Likewise, since each of the three D Entries contains the non-path feature label "Windy Lake", this label is listed three times in the label list. Preferably, the label list is sorted alphabetically to streamline the algorithm that searches for redundancies and performs the linking.

In the example depicted in FIG. 9A, the label list 700 includes a link field or link parameter that indicates for each label entry (each listed instance of each label) what its relationship is with a previous or subsequent label of the same name. Linking of labels can be accomplished using a standard linked-list construct for objects, which is well known in the art. If a label appears only once in the label, i.e. has merely a single instance, then it cannot be linked to another label, and therefore its link parameter, or link field, is simply indicated as "None". Thus, returning to the specific example presented in FIG. 9A, the path label "First Avenue" appears only once, and therefore its link parameter is "None". The same holds for Second Avenue, which appears only once. Its link parameter is thus also designated as "None."

Unlike First Avenue and Second, the path label "Main Street" appears three times, and thus its link parameters need to determined. Determining link parameters (or link status) can be accomplished by comparing endpoints of each link segment, as depicted in FIG. 9B. As shown in FIG. 9B, the endpoints (x1,y1) of the first path segment of Main Street are compared with the endpoints (x2,y2) of the second segment of Main Street. If the endpoints (x,y coordinates) are equal (or at least match within a predetermined tolerance), then the segments are eligible to be stitched together. Accordingly, the link parameter/status is updated to reflect the concordance of the endpoints of the path segments. In this example, the first instance of the Main Street label shows that the link parameter is "Next" (meaning that the segment with this label connects to the segment associated with the next label in the list).

As depicted in FIG. 9B, the endpoints (x3,y3) of the second segment of path label "Main Street" are compared with the endpoints (x4,y4) of the third segment of "Main Street" to determine whether these endpoint coordinates coincide. If the endpoints coincide (or match within the tolerance), as they do in this example, the link parameter is updated to indicate that the third label is linked to the "previous" label, i.e. the second label. Using this linked-list construct, the relationships between the first Main Street label and the second Main Street label and between the second Main Street label and the third Main Street label are defined. In this example, the first Main Street label is linked to the next label, i.e. the second Main Street label (and, conversely, the second Main Street label is linked to the previous Main Street label). The third Main Street label is linked to the previous Main Street label as well (i.e. to the second Main Street label). As a result, all three labels are linked together, meaning that the three path segments can be stitched together.

Likewise, the label list also accounts for linkage relationships between non-path map features such as the lake shown in FIGS. 6-8. Its label "Windy Lake" appears in each D Entry and thus three instances of this label appear in the label list. Again, by comparing endpoints or perimeter points, the constituent parts of the lake can be compared to see whether they match or align. If so, the link fields for each Windy Lake entry can be updated as was done for Main Street.

As further depicted in FIG. 9B, the label list 700 can include a vector field and a flag field. The map data is stored in vector format, allowing the vectors (data) to be packaged in small "chunks" to facilitate OTA transmission and rendering. If the bounding box of each "chunk" of data, or D Entry, is small then it is quicker to intersect its bounding box with the screen's bounding box to determine if it needs to be rendered (and requested/transmitted if it not already cached client-side). Chunking up the data into small packages or D Entries, however, means that paths and other map features (each having their own labels) will likely extend into more than one D Entry. The foregoing technique effectively reconstructs the paths (or features) by checking whether the endpoints of path segments (or whether the constituent parts of features) coincide or fit together. A further problem that arising with the D Entries being in vector format is that the directionality of one segment of a path (or feature) could be opposite to that of another segment even if their respective endpoints coincide. Prior to stitching these segments (or constituent parts) together, then, it is preferable to assess the directionality of the vectors defining the segments (or constituent parts). This can be accomplished using a unit vector notation such as a presented, by way of example only, in FIG. 9A. In this example, the First Avenue label is rendered using a unit vector that runs vertically download (in the y-direction) without any horizontal component (x = 0). Thus, the vector is denoted as (0,-1). The magnitude of the vector is not relevant, only direction. Comparison of vector directionality is depicted, again by way of example only, in FIG. 9C which shows the three segments of the path Main Street and their associated vectors. Assuming that the first segment of Main Street has unit vector (1,-1), that the second segment has unit vector (1,0) and that the third segment has unit vector (-1,0), then it is observed that the second and third segments have opposite directions, as shown in FIG. 9C. Accordingly, this inconsistency in the directionality of two contiguous segments that are eligible to be conjoined or stitched together for the purposes of feature reconstruction is flagged in label list 700. The flag indicates that the third segment of Main Street needs to have the direction of its vector reversed. Once all vectors have been aligned by reversing any inconsistent segments of the path, the three segments can be "stitched" or "spliced" together to generate the contiguous, reconstructed path.

Optionally, when the reconstructed path is generated, the length of each constituent path segment and/or the total length of the reconstructed path are stored. These values can be used to determine an initial starting point for centering each label vis-à-vis the midpoint of the reconstructed path. Knowledge of these values also facilitates repositioning of the label when a potential label collision is detected or foreseen. These values can be stored as further fields of the label list 700. Labels can thus be rendered, or virtually rendered, with reference to the center of the reconstructed path, which is the preferred technique. Alternatively, labels can be rendered (or repositioned in the virtual rendering process) by virtually rendering a label along a center of a middle segment (or the segment closest to the middle of the onscreen bounding box) and then, if all of the label does not fit along that segment, checking whether the segment is spliced to a further segment (i.e. checking whether a reconstructed path exists for that label).

Similarly, when reconstructing non-path features (i.e. features that are not lines but rather polygons), other dimensions such as, for example, the average horizontal width of the polygon feature, can be stored for each of the constituent elements of the non-path map feature and for the reconstructed map feature, also for the purposes of facilitating centered labelling of the reconstructed feature.

The label list 700 depicted in FIG. 9A can be implemented using a labelPath object created for the path, containing the path data, the label and any other information used to render the label on the map. Every labelPath object would then be placed into a list sorted alphabetically according to the label associated with each path. When each labelPath object is added to the list, a check is performed to see if there are any other labelPath objects whose labels are identical to the label of the path being added. If other labelPath objects are found with identical labels, the endpoints are compared and, if any match, then the labelPath objects are associated with each other using a standard linked-list construct, as alluded to above.

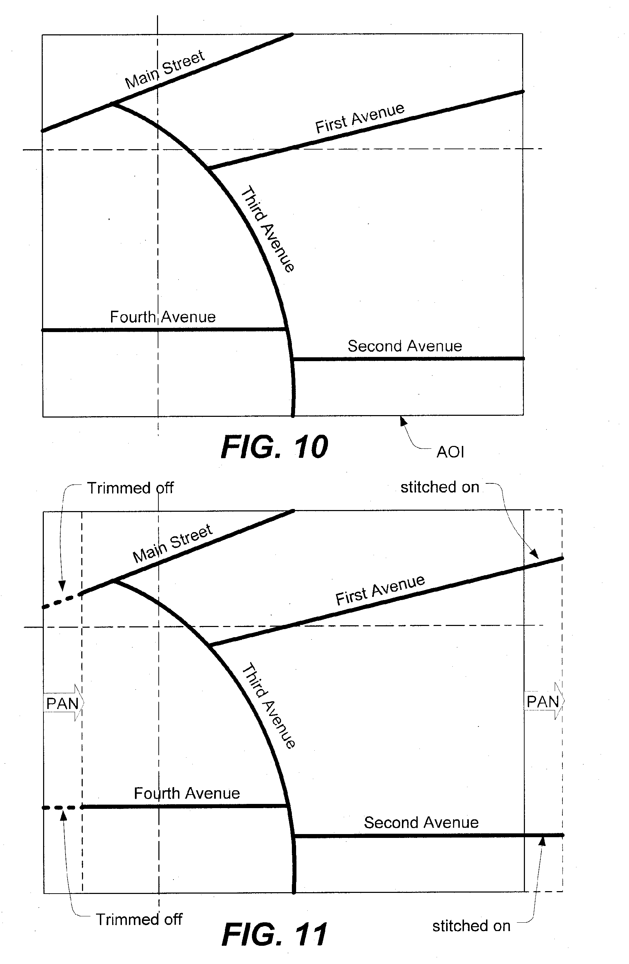

FIG. 10 depicts a street map of an area of interest (AOI) having four reconstructed paths (streets), namely Main Street, First Avenue, Third Avenue and Fourth Avenue as well as one unreconstructed path, namely Second Avenue. The map of this AOI has been reconstructed from the DEntries of four adjoining Maplets (whose mutual borders are illustrated by the two orthogonal dash-dot lines). The reconstructed paths were reconstructed by stitching together each of the paths at their respective endpoints, using the techniques described with regard to the foregoing figures. Second Avenue is the only unreconstructed path since it was wholly contained within its respective Maplet, and thus no stitching or splicing was required. The labels on this map were then centered along each respective reconstructed path for aesthetic reasons. In centering the labels, some repositioning (off-centering) may prove to be inevitable as a consequence of having to avoid collisions with other labels. A collision-avoidance algorithm will attempt to place the label centrally (at a midpoint of the path), if possible, but will then reposition the label, if necessary, to avoid collisions with other labels onscreen.

FIG. 11 shows the same map of FIG. 10 after it has been panned to the right. In accordance with the novel method described herein, the reconstructed (and unreconstructed) paths are modified. Modifying these paths can entail either stitching or splicing further segments that are now within the AOI to the existing paths or trimming off portions of the paths that are no longer within the AOI. In the example presented in FIG. 11, additional segments are stitched onto First Avenue and Second Avenue, while portions of Main Street and Fourth Avenue are trimmed off. The labels can then optionally be repositioned (or recentered), again optionally applying a collision-avoidance algorithm to ensure an aesthetic placement onscreen.

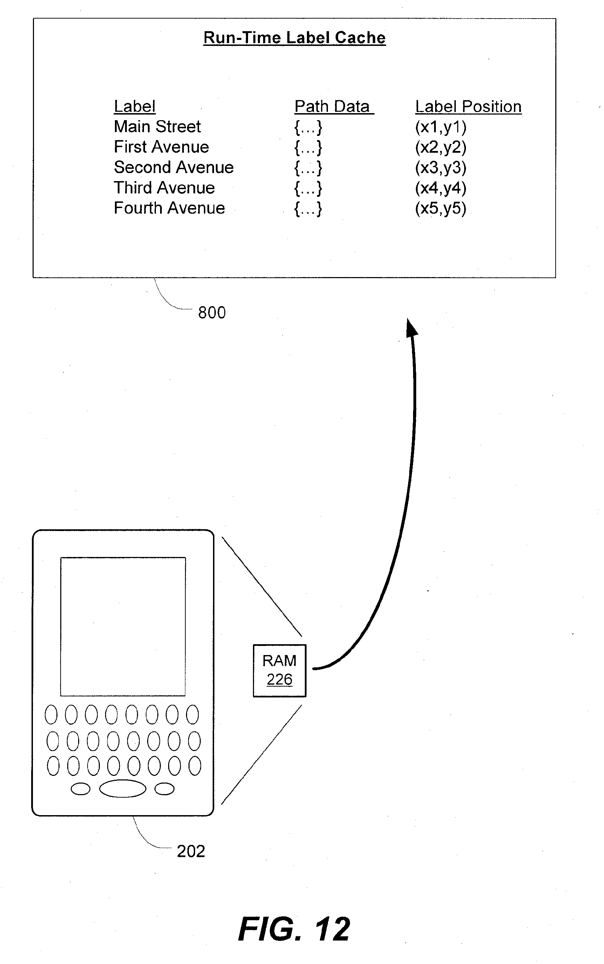

FIG. 12 schematically depicts a run-time label cache 800 for caching (i.e. storing) labelPath objects. The labelPath objects include the names of the labels (label strings), the path data itself (the set of vector data that represents the path in the bounding box), and optionally also the label position. The path data is preferably stored as a set of points for each reconstructed path (but could also be stored as Bezier curves). The labelPath objects may also include the "linkages" or individual path segments that are stitched (or "linked") together to form the reconstructed path.. As shown in FIG. 12, the run-time label cache can be stored in RAM 226 of the wireless device 202, where it is most accessible to the processor, although the run-time label cache could also be stored elsewhere.

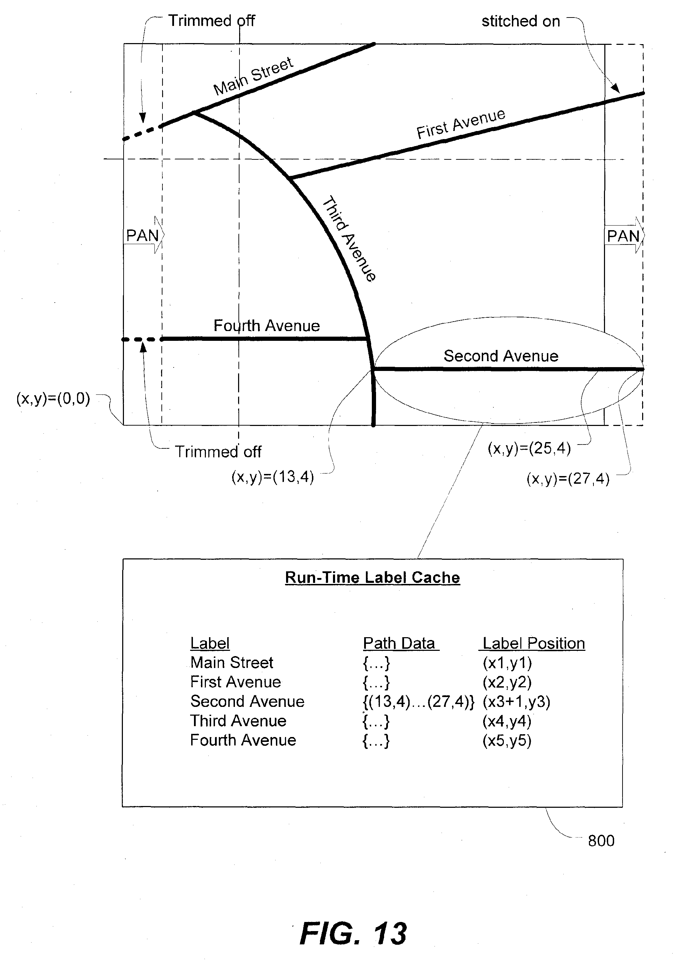

FIG. 13 shows how the run-time label cache 800 is updated dynamically as the map is panned, zoomed or otherwise shifted (i.e. as the area of interest changes). The particular example presented in FIG. 13 shows how the entry (or labelPath Object) for Second Avenue is modified in real-time in the run-time label cache 800. When the map is panned to the right, for example, the labelPath object Second Avenue is partially re-stitched because a new segment or path portion comes into view (enter the AOI). This new segment has to be stitched or spliced to the existing labelPath object. In so doing, the run-time label cache 800 is dynamically updated by extending the right-side endpoint and optionally also updating the label position. In this particular example, some purely arbitrary coordinates are assigned to the path Second Avenue. On the left, its X-Y coordinates are (13,4) and on the right (25,4) prior to the pan. Assuming the map is panned two units to the right, then the new path is described by the set of all points between (13,4) and (27,4), i.e. a value of 2 is added to the x-coordinate of the right-side endpoint. This is a deliberately simplified example to show how the labelPath objects can be dynamically updated to refresh the run-time label cache so that its entries remain constantly reusable by the device for rapid rendering of maps. This technology obviates the need to re-compute all the reconstructed map features and their label positions from scratch every time the map is panned ever so slightly. Thus, in the example map presented in FIG. 13, there is no need to re-compute the labelPath object for Third Avenue (as this reconstructed map feature remains unchanged by the pan to the right). The other labelPath objects (Main Street, First Avenue, Second Avenue, and Fourth Avenue), however, must be modified (trimmed or stitched) as a consequent of the panning action, and this is therefore reflected in the real-time modifications made to the respective entries in the run-time label cache 800.

The foregoing method steps can be implemented as coded instructions in a computer program product. In other words, the computer program product is a computer-readable medium upon which software code is recorded to perform the foregoing steps when the computer program product is loaded into memory and executed on the microprocessor of the wireless communications device.

This new technology has been described in terms of specific implementations and configurations which are intended to be exemplary only. The scope of the exclusive right sought by the Applicant is therefore intended to be limited solely by the appended claims.

## Claims

1. A method of displaying a labelled map on a wireless communications device, the method comprising steps of:
creating a run-time label cache in a memory of the wireless communications device;
reconstructing a map feature from discrete sets of map data that provide redundant labels for the map feature to thereby generate a reconstructed map feature having only a single instance of the label;
storing in the run-time label cache the reconstructed map feature and the single instance of the label associated with the reconstructed map feature; and
upon receipt of new map data, rendering the labelled map based only partially on the new map data by reusing the reconstructed map feature and the single instance of the label associated with the reconstructed map feature stored in the run-time label cache.

2. The method as claimed in claim 1 wherein the step of reusing the reconstructed map feature comprises a step of modifying the reconstructed map feature based on the new map data received.

3. The method as claimed in claim 2 wherein the step of modifying the reconstructed map feature comprises a step of trimming a portion of the reconstructed map feature that has now moved outside an area of interest 'AOI' .

4. The method as claimed in claim 2 or claim 3 wherein the step of modifying the reconstructed map feature comprises a step of stitching to the reconstructed map feature a new portion of the map feature that has now moved into the area of interest 'AOI'.

5. The method as claimed in any one of claims 2 to 4 further comprising a step of repositioning the label after having modified the reconstructed map feature based on the new map data.

6. The method as claimed in any one of the preceding claims wherein the step of reconstructing the map feature comprises reconstructing a path by stitching together constituent path segments to thereby create a reconstructed path.

7. The method as claimed in claim 6 wherein the step of stitching together constituent path segments comprises a step of determining whether an endpoint of a first path segment that is defined by map data of a first set of map data matches an endpoint of a second path segment that is defined by map data of a second set of map data.

8. The method as claimed in claim 7 wherein the step of reusing the reconstructed map feature comprises a step of modifying the reconstructed path for a revised area of interest 'AOI'.

9. The method as claimed in claim 8 wherein the step of modifying the reconstructed path for the revised area of interest comprises a step of trimming off a portion of the reconstructed path that has now moved outside the area of interest.

10. The method as claimed in claim 8 or claim 9 wherein the step of modifying the reconstructed path comprises a step of stitching to the reconstructed path a portion of a new path segment that has now moved into the area of interest and whose endpoint matches an endpoint of the reconstructed path.

11. The method as claimed in claim 10 further comprising a step of repositioning the single instance of the label along the reconstructed path after having modified the reconstructed path.

12. A computer program product comprising code which, when loaded into a memory and executed on a processor of a wireless communications device is adapted to cause said wireless communications device to perform the steps of the method of any one of claims 1 to 11.

13. A wireless communications device for displaying a labelled map on the device, the wireless communications device comprising:
a radiofrequency transceiver for receiving map data to be rendered on a display of the device; and
a processor coupled to a memory for reconstructing a map feature from discrete sets of map data that provide redundant labels for the map feature to thereby generate a reconstructed map feature having only a single instance of the label,
and wherein the memory is configured to store a run-time label cache for caching the reconstructed map feature and the label associated with the reconstructed map feature for reuse in rendering a subsequent map that also includes the reconstructed map feature.

14. The wireless communications device as claimed in claim 13 wherein the processor is configured to execute a feature-stitching algorithm that stitches to the reconstructed map feature a new portion of the map feature that has now moved into the area of interest for the subsequent map to be rendered.

15. The wireless communications device as claimed in claim 13 or claim 14 wherein the processor is configured to execute a feature-trimming algorithm that trims off a portion of the map feature that has now moved outside an area of interest of the subsequent map to be rendered.

16. The wireless communications device as claimed in claim 14 or claim 15 wherein the processor is configured to execute a label-placement algorithm for repositioning the label of the reconstructed map feature for each subsequent map to be rendered.

17. The wireless communications device as claimed in any one of claims 13 to 16 wherein the reconstructed map feature comprises a reconstructed path that has been stitched together from constituent path segments.

## Amended claims

### Amended claims in accordance with Rule 137(2) EPC.

**1.** A method of displaying a labelled map on the display (222) of a wireless communications device (202), the method comprising steps of:
receiving (606) map data for a first area of interest, said map data comprising a plurality of data sets, each comprising data representing geographic features for a discrete area, wherein geographic features which extend across multiple discrete areas are represented in each said data set by data defining the discrete portions of said geographic features within each respective area and label data identifying said geographic features;
combining (608) the data for geographic features which extend across multiple discrete areas to generate a single set of data for representing each said feature within said first area of interest and associating the combined data for a geographic feature with a single instance of label data for said feature;
storing (610) the combined data including the single instance of the label data for each said feature in a run-time label cache in a memory (224,226) of the wireless communications device (202); and
rendering (616-620) a labelled map for a second area of interest which partially overlaps said first area of interest on a display (222) of the device (202) utilising the combined data stored in said run- time label cache to render portions of geographic features in said area of overlap.

**2.** The method as claimed in claim 1 further comprising:
determining portions of geographical features for which combined data is stored in said run-time label cache which are not in said second area of interest;
modifying the combined data stored in said run-time label cache to generate data for representing only said portions of geographical features which lie within the area of overlap between said first and second areas of interest; and
storing said modified data in said run-time label cache.

**3.** The method as claimed in claim 1 or claim 2 further comprising:
receiving (606) map data for geographic features in the portion of said second area of interest outside said first area of interest;
identifying geographical features for which combined data is stored in said run-time label cache which extend into the portion of said second area outside said first area of interest; and
modifying the combined data stored in said run-time label cache by combining (608) the data for said identified geographic features in said run-time label cache with received data representing said features the portion of said second area of interest outside said first area of interest.

**4.** The method as claimed in claim 2 or claim 3 further comprising a step of repositioning the label for a geographical feature after having modified the data for representing said feature stored in said run-time label cache.

**5.** The method as claimed in claim 3 wherein the combining (608) the data for said identified geographic features in said run-time label cache comprises reconstructing a path for a geographical feature by stitching together constituent path segments represented by data stored in said run-time label cache with constituent path segments for the portion of said feature in the portion of said second area of interest outside said first area of interest to thereby create a reconstructed path.

**6.** The method as claimed in claim 5 wherein stitching together constituent path segments comprises a step of determining whether an endpoint of a first path segment that is defined by data stored in said run-time label cache matches an endpoint of a second path segment that is defined by map data a geographic feature in the portion of said second area of interest outside said first area of interest.

**7.** The method as claimed in any preceding claim wherein said geographical features comprise streets or coastlines.

**8.** A computer program product comprising code which, when loaded into a memory (224,226) and executed on a processor (238) of a wireless communications device (202) is adapted to cause said wireless communications device (202) to perform the steps of the method of any one of claims 1 to 7.

**9.** A wireless communications device (202) for displaying a labelled map on the device (202), the wireless communications device (202) comprising:
a radiofrequency transceiver (211) operable to receive (606) map data for areas of interest, comprising a plurality of data sets, each comprising data representing geographic features for a discrete area, wherein geographic features which extend across multiple discrete areas are represented in each said data set by data defining the discrete portions of said geographic features within each respective area and label data identifying said geographic features; and
a processor (238) coupled to a memory (224,226) including a run-time label cache operable to store data, the processor (238) being arranged in response to receipt of map data for a first area of interest by said transceiver (211) to:
combine (608) the data for geographic features which extend across multiple discrete areas to generate a single set of data for representing each said feature within said first area of interest and associate the combined data for a geographic feature with a single instance of label data for said feature; and
store (610) the combined data including the single instance of the label data for each said feature in the run-time label cache of said memory (224,226); and
responsive to identification (614,616) of a second area of interest which partially overlaps said first area of interest to render (620) a labelled map for said second area of interest utilising the combined data stored in said run- time label cache to render portions of geographic features in said area of overlap.

**10.** The wireless communications device (202) as claimed in claim 9 wherein the processor (238) is further configured in response to identification (614,616) of a second area of interest which partially overlaps said first area of interest to:
determine portions of geographical features for which combined data is stored in said run-time label cache which are not in said second area of interest; modify (618) the combined data stored in said run-time label cache to generate data for representing only said portions of geographical features which lie within the area of overlap between said first and second areas of interest; and
store said modified data in said run-time label cache.

**11.** The wireless communications device (202) as claimed in claim 9 or claim 10 wherein the processor (238) arranged in response to receipt by said transceiver (211) of map data for portions of a second area of interest outside said first area to:
identify geographical features for which combined data is stored in said run-time label cache which extend into the portion of said second area outside said first area of interest; and
modify (618) the combined data stored in said run-time label cache by combining (608) the data for said identified geographic features in said run-time label cache with received data representing said features the portion of said second area of interest outside said first area of interest.

**12.** The wireless communications device (202) as claimed in claim 10 or claim 11 wherein said processor (238) is further arranged to reposition the label for a geographical feature after having modified the data for representing said feature stored in said run-time label cache.

**13.** The wireless communications device (202) as claimed in claim 11 wherein said processor (238) is configured to combine (608) the data for said identified geographic features in said run-time label cache comprises reconstructing a path for a geographical feature by stitching together constituent path segments represented by data stored in said run-time label cache with constituent path segments for the portion of said feature in the portion of said second area of interest outside said first area of interest to thereby create a reconstructed path.

**14.** The wireless communications device (202) as claimed in claim 13 wherein said processor (238) is configured to stitch together constituent path segments by determining whether an endpoint of a first path segment that is defined by data stored in said run-time label cache matches an endpoint of a second path segment that is defined by map data a geographic feature in the portion of said second area of interest outside said first area of interest.

**15.** The wireless communications device (202) as claimed in any of claims 9-14 wherein said geographical features comprise streets or coastlines.
